# EUROPEAN PATENT APPLICATION

(11) **EP 2 413 381 A2**
(43) Date of publication of application: **01.02.2012**
(21) Application number: 11166608.7
(22) Date of filing: 18.05.2011
(51) Int. Cl.: H01L 31/042, F24J 2/52

(54) **Method and apparatus providing simplified installation of a plurality of solar panels**

(30) Priority: 01.12.2010 US 957808; 29.07.2010 US 846621; 29.07.2010 US 846644; 29.07.2010 US 846686
(71) Applicant: First Solar, Inc., Perrysburg, OH 43551 (US)
(72) Inventor: Bellacicco, John, Stamford, NJ 06903 (US); Kuster, Thomas P., Clinton, NJ 08809 (US); Hartelius, John, Brick, NJ 08724 (US); Cabuhay, Henry, Morris Plains, NJ 07950 (US); Monaco, Michael, Stanhope, NJ 07874 (US); Perkins, Martin, Fountain Hills, AZ 85268 (US); Oshman, Tom, Hoboken, NJ 07030 (US)
(74) Representative: Roberts, Gwilym Vaughan

(57) **Abstract**

A method of mounting a plurality of solar panel carriers, which comprise, one or more solar panels mounted thereon, to a support structure is described. Mounting is performed by first placing a solar panel carrier onto the support structure at a first position along the support structure and advancing that solar panel carrier on the support structure to allow a second solar panel carrier to be placed on the support structure behind it. The second solar panel carrier is placed on the support structure and advanced into contact with the first solar panel carrier and both can be advanced together along the support structure. Additional solar panel carriers can he placed on the support structured and advanced in the same fashion. Single and multiple solar panel carriers are also described.

## Description

### RELATED APPLICATIONS

This application is a continuation-in-part of U.S. Patent Application Serial Nos. 12/846,621, filed July 29, 2010. 12/846,644, filed July 29, 2010, and 12/846,686. filed July 29, 2010, the disclosures of each of which are incorporated herein by reference.

### FIELD OF THE INVENTION

Embodiments of the invention relate to simplifying installation of solar panels in large-scale arrays.

### BACKGROUND OF THE INVENTION

Photovoltaic power generation systems are currently constructed by installing a foundation system (typically a series of posts or footings), a module structural support frame (typically brackets, tables or rails, and clips), and then mounting individual solar panels to the support frame. The solar panels are then grouped electrically together into PV strings, which are fed to an electric harness. The harness conveys electric power generated by the solar panels to an aggregation point and onward to electrical inverters.

Prior art commercial scale PV systems such as this must be installed by moving equipment, materials, and labor along array rows to mount solar panels on the support frames one-at-a-time. This is a time-consuming process, which becomes increasingly inefficient with larger scale systems.

With innovations in PV cell efficiency quickly making PV-generated energy more cost-effective, demand for large-scale PV systems installations is growing. Such systems may have a row length of half a mile or more. Accordingly, a simplified system for solar panel installation is needed.

### BRIEF DESCRIPTION OF THE DRAWINGS

FIG. 1 is perspective view showing a carrier for mounting a plurality of solar panels in a first embodiment.

FIG. 2 is a close-up perspective view showing a recessed area in the carrier.

FIGs. 3A-3B arc close-up perspective views showing solar panels mounted in the carrier.

FIG. 3C is a cross-sectional side view showing a solar panel mounted in the carrier.

FIG, 4 is a top-down view showing a schematic of the electrical wiring in the carrier

FIG. 5 is a perspective view showing attachment structures on the underside of the carrier.

FIGs 6A-6B are perspective views, respectively showing different arrangements for mounting the carrier to spaced parallel support rails.

FIG. 7 is a cross-sectional side view showing one embodiment of an attachment structure for mounting the to a support rail.

FIG. 8 is a perspective view showing another embodiment of an attachment structure for mounting the to a support rail.

FIG. 9 is a cross-sectional side view showing another embodiment of an attachment structure for mounting the carrier to a support rail.

FIG.10A is a top-down view showing another embodiment of carrier.

FIGS. 10B-C are a side view and cross-sectional side view of the carrier along axes A and B, as shown in FIG. 10A.

FIG. 11 is a perspective view showing another embodiment of an attachment structure for mounting a carrier to parallel support rails.

FIG. 12 is a side view showing the attachment structure of FIG. 11 for mounting a carrier to parallel support rails provided on a folding table.

FIG.13 is a close-up cross-sectional side view of the attachment structure of FIG. 11.

FIG. 14 is a perspective view of another embodiment of a carrier.

FIGs. 15A-D are perspective views of carriers being mounted to support rails one after another.

FIG. 16 is a perspective view showing a carrier for mounting a single solar panel.

FIGs. 17A-17B show perspective views of FIG. 16 carriers being mounted to support rails on a roof structure one after another.

FIG. 18 is a view showing operation of a robotic installation system for installing FIG. carriers.

FIGs. 19A-E are views showing operation of a push actuator of the FIG. 18 robotic installation system.

FIGs. 20A-B are perspective views showing a field array installation using carriers and support structures detailed herein.

### DETAILED DESCRIPTION OF THE INVENTION

in the following detailed description, reference is made to the accompanying drawings which form a part hereof, and which illustrate specific embodiments of the invention. These embodiment are described in sufficient detail to enable those of ordinary skill in the art to make and use them. It is also understood that structural, logical, or procedural changes may be made to the specific embodiments disclosed herein.

Described herein is a method for mounting and sliding a multiplicity of mountable solar panels along a rail system using a solar panel carrier. For utility scale ground mounted solar systems or commercial or residential rooftop systems, the use of a rail system to slide carriers each containing one or more solar panels into place provides several benefits. By moving all work to one or more locations along each row, *e.g.,* at the head, the system maximizes the use of preassembled components, minimizes material movement logistics, and reduces both on-site field labor and equipment movement over the site. One embodiment of the system is constructed by installing a support structure comprising a plurality of spaced parallel rails, which may be ground or structure supported, designed to receive and allow sliding movement of a pre-assembled carrier that supports either a single solar panel or a plurality of solar panels as a unit. The support structure could also comprise a solar tracking system which would allow the rails to be rotated.

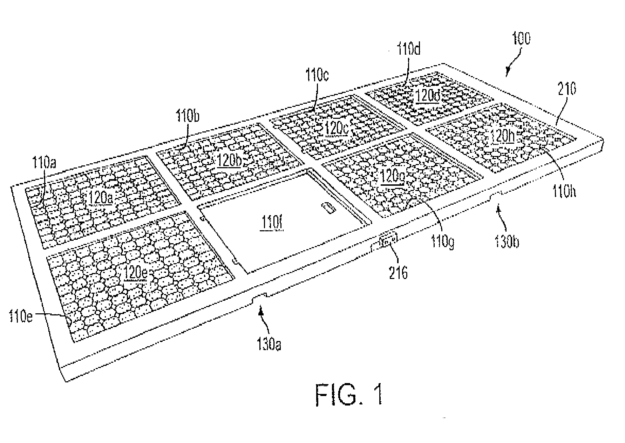

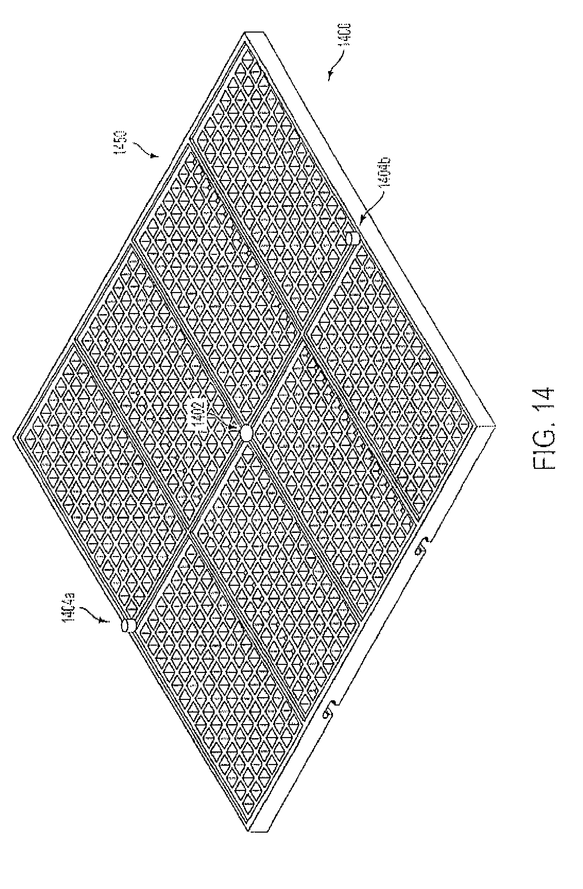

A first embodiment of a carrier 100 is depicted in FIGs. 1,2,3, 4 and 5. Carrier 100 is a lightweight, cartridge-like structure that provides structural support and contains and supports a plurality of solar panels 120a-h in a 4 x 2 array and facilitate their electrical interconnection. The carrier 100 is made of either synthetic or natural structural material, including, but not limited to, aluminum, rolled steel, or other metals and plastics. As an alternative, and as shown by element 1400 in FIG. 14, the carrier 1400 can be constructed in a honeycombed or gridded structure. This saves weight while maintaining structural strength.

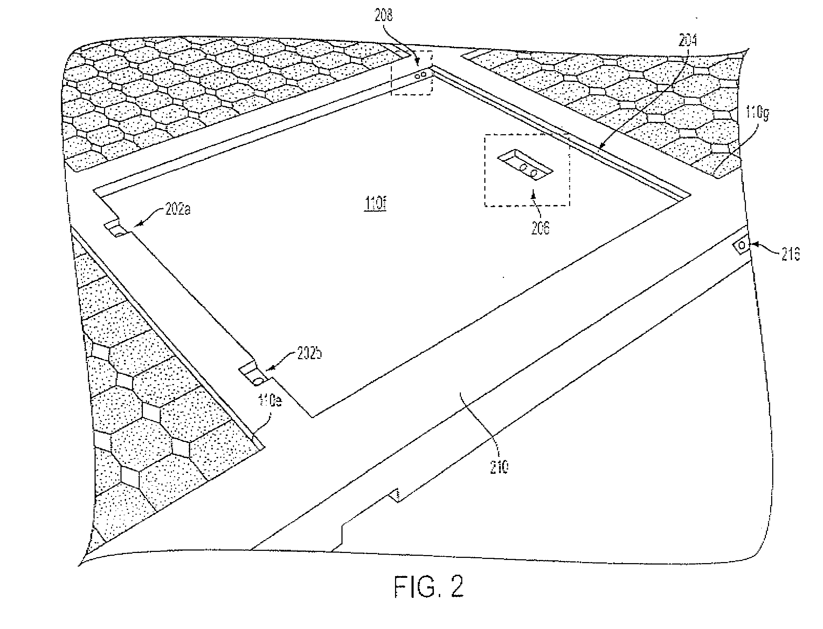

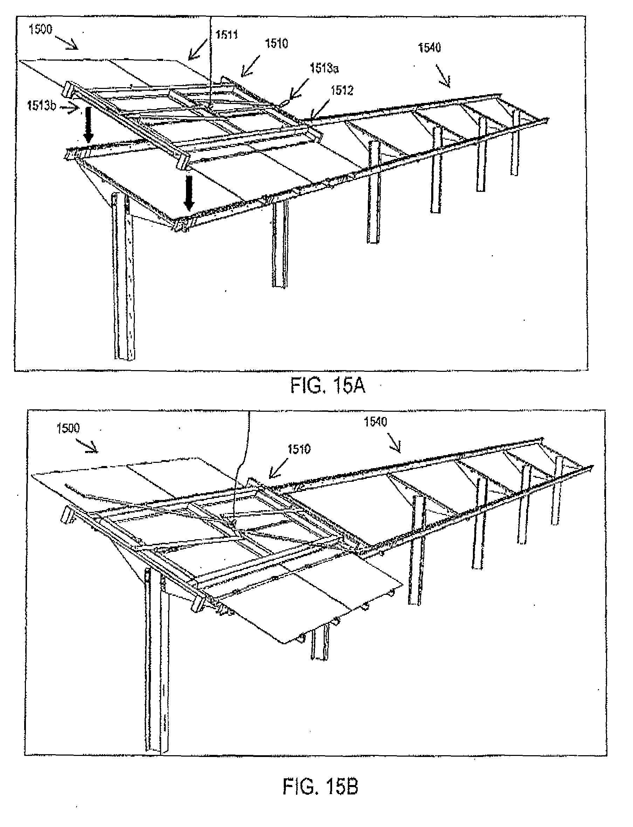

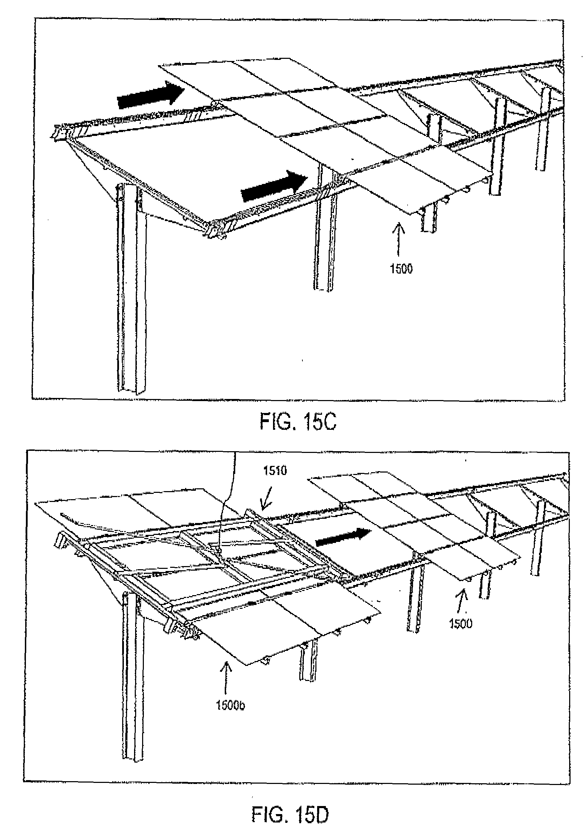

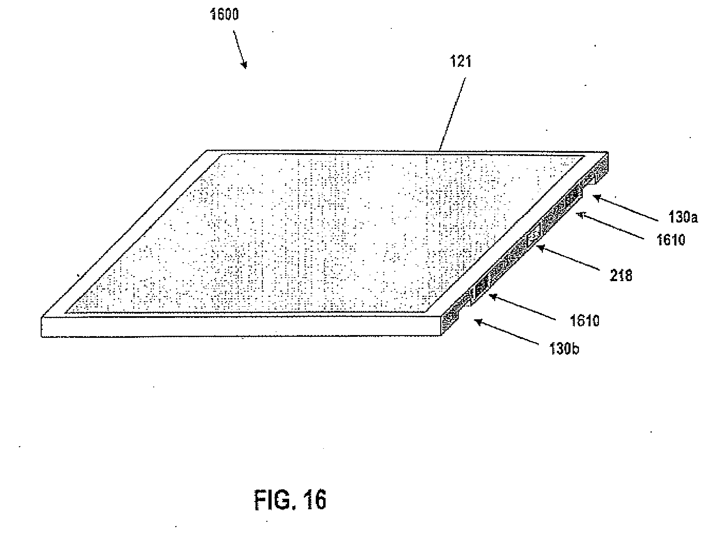

As shown in more detail in FIGs, 1, 2 and 3A-3B, a plurality of solar panels 120a-h are mounted in respective recessed areas 110a-h of carrier 100, with one such recessed area 11 of being shown without an installed solar panel in FIG. 2. Solar panels 120a-h are held in place by being snapped, clipped, or otherwise securely seated in each of the recessed areas 110a-h , The solar panels 120a-h are preferably mounted in the recesses 110a-h before conveyance of a carrier to an installation site, so all that needs to be done at the installation site is to mount the carrier 100 containing a plurality of solar panels to a support structure. Although an array of eight solar panels 120a-h in a 4 x 2 array is shown in the Figures as being supported by carrier 100, it is understood that any number or arrangement of solar panels could be mounted on and supported by a carrier 100, For instance, FIG. 15 shows a 4 x 1 array of solar panels on a carrier 1500, while FIG. 16 shows a single solar panel on a carrier 1600.

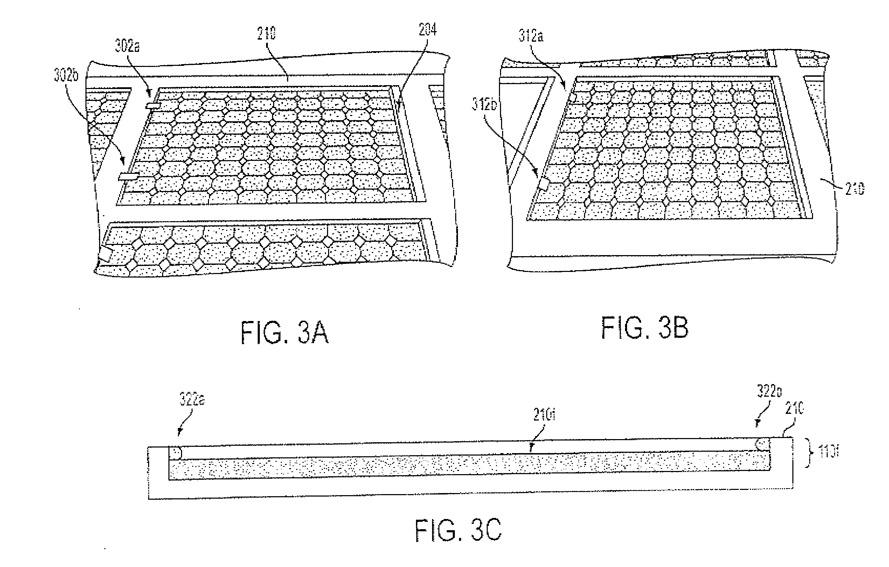

Figures 2 and 3A show one embodiment of an arrangement for mounting solar panels in the recessed areas 110a-h of carrier 100. One edge of a solar panel. *e.g,* 210f (not shown) is slid under a lip groove 204 within recessed area 110f and lowered into position. To secure a solar panel in place, clips 302a-b which engage with an opposite edge of a solar panel are themselves engaged by screws or other fasteners with openings 202a-b provided on a side of the recess 110f opposite the side containing lip groove 204. Together with lip groove 204, clips 302a and 302b hold a solar panel in place within a recess. An alternate embodiment, for securing, the solar panels in the recesses is shown in Figure 3B, which uses spring-back clips 312a-b that overhang an edge of the recess. As one edge of a solar panel is slid under a lip groove 204 in a recess, it is then lowered into position, causing the opposite edge to press against the spring-back clips 312a-b, which push back and bend until the solar panel clears the bottom of the clips. Once clear, the clips 312a-b will slide back over top of the solar panels, securing it in place.

Clips and grooves are not the only way solar panels can be mounted in recesses of the carrier 100; glue, Velcro™,or other known engagement means can be used. In another embodiment for securing the solar panels to the recesses, resilient engagement members can be used to hold the panels in place. FIG. 3C, for instance, shows a pair of rubber stoppers 322a-b at opposite ends of a recessed area 1 10f which allow panel 21 0f to be slid under one of the stoppers 322a and then pressed down past the other stopper 322b to be hold in place. The carrier 100 is preferably configured so that whichever structure are used to hold a solar panel within a recess is used, solar panels 120a-h are either flush with or below a top surface 210 of the carrier 100. This allows the carrier 100 to be stacked with like carriers for shipping and also protect the solar panels 120a-h while in storage or transmit to an installation site.

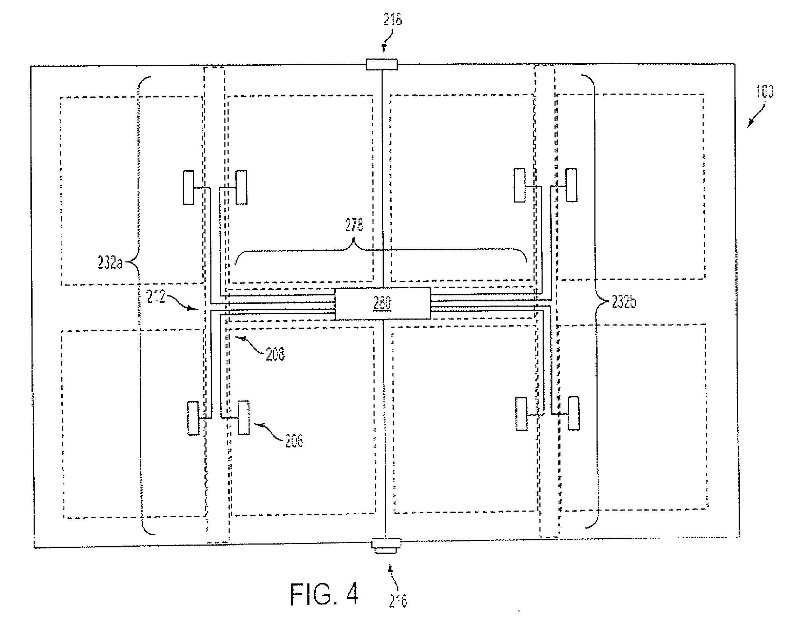

In general, solar-generated electricity is harvested and transmitted through a prewired common bus or cable system integral to the carrier 100. Some examples of a common bus system that may be employed are described in more detail in co-pending Application Serial No. 12/846,671, the disclosure of which is incorporated by reference herein. One embodiment of pre-wiring a carrier 100 for connection to a common bus system 280 is schematically shown in Figures 2 and 4. As shown in Figure 2, an electrical connector 206 can be provided in the lower surface of the recessed area 11 of so that when a solar panel is placed in a recessed area 110f, a plug on the bottom of a solar panel engages electrical connector 206 to connect it to the common bus system 280. Figure 2 also shows an electrical connector 208 provided in a sidewall of the recess 11 Of that could be used in lieu of connector 206 to connect wiring 212 to side electrical connectors on a solar panel. An exemplary electrical connection schematic for a carrier 100 is shown in Figure 4.

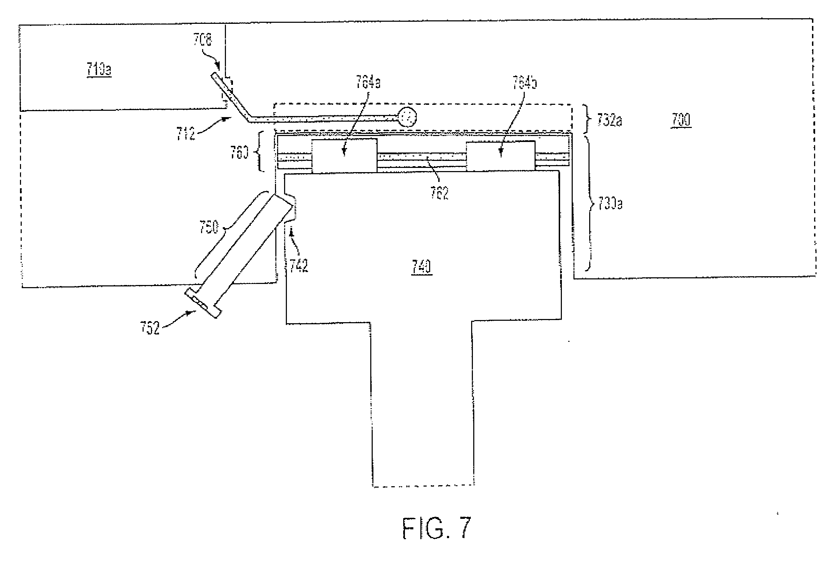

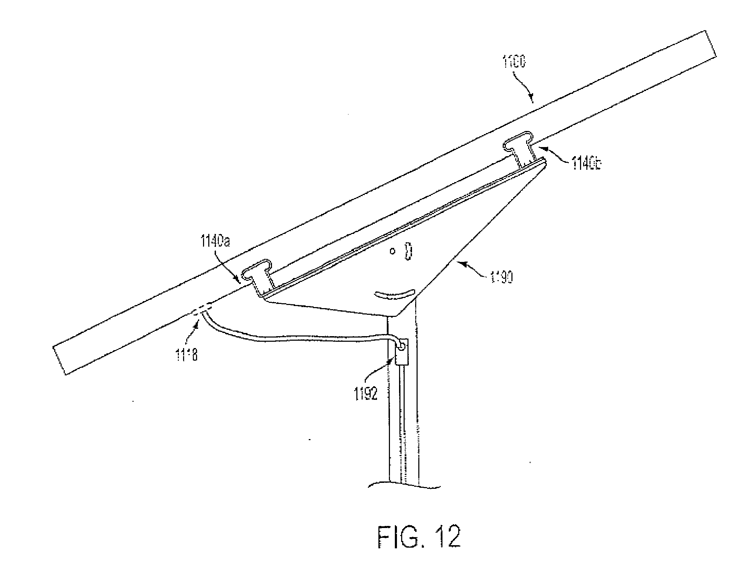

As shown in Figure 4, the wiring 212 for a carrier 100 runs from the electrical connectors 206 in each recessed area 110a-h into channels 232a-b provided in carrier 100 which run above each attachment area 130a-b (a similar channel 732a is also shown in Figure 7), Each of the channels 232a-b is connected to a transverse central channel 278 which runs through carrier 100, which houses the common bus system 280. The wiring 212 connects electrical connectors 206, and thus the solar panel engaged in each recess 110a-h to the common bus system 280. Although the common bus system 280 in each carrier 100 can be terminated at an electric harvester on a carrier 100 support structure, such as is shown in Figure 12, Figure 4 shows an embodiment where each carrier 100 can be equipped with a male electrical connector 216 and female electrical connector 218 for interconnecting the common bus systems 280 of multiple carriers 100, together. In this manner, as the carriers 100 arc slid into position on a support structure in the manner discussed in more detail below and pressed against each other, corresponding male 216 and female 218 connectors engage to electrically connect the solar panels of adjacent carriers 100. Interconnected carriers 100 can then transfer electric power to a common point and onward to an electrical inverter before connecting to an electrical grid.

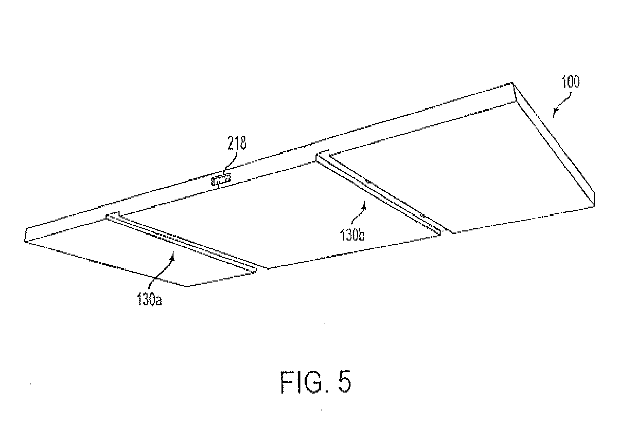

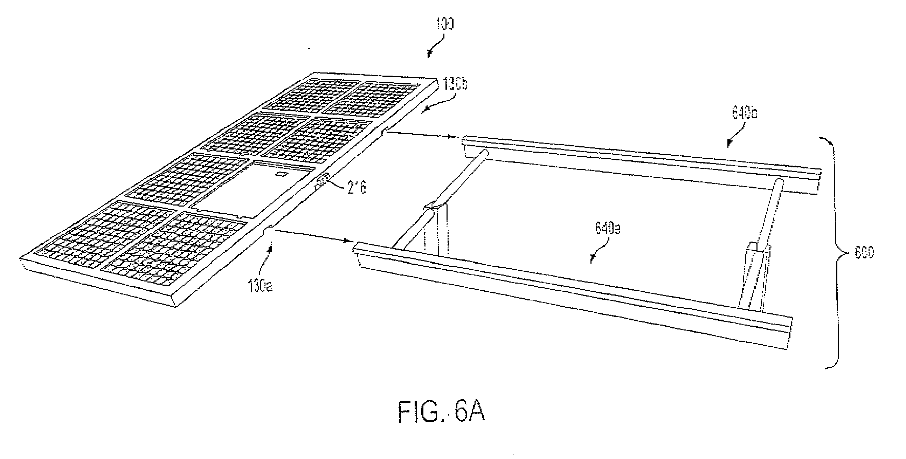

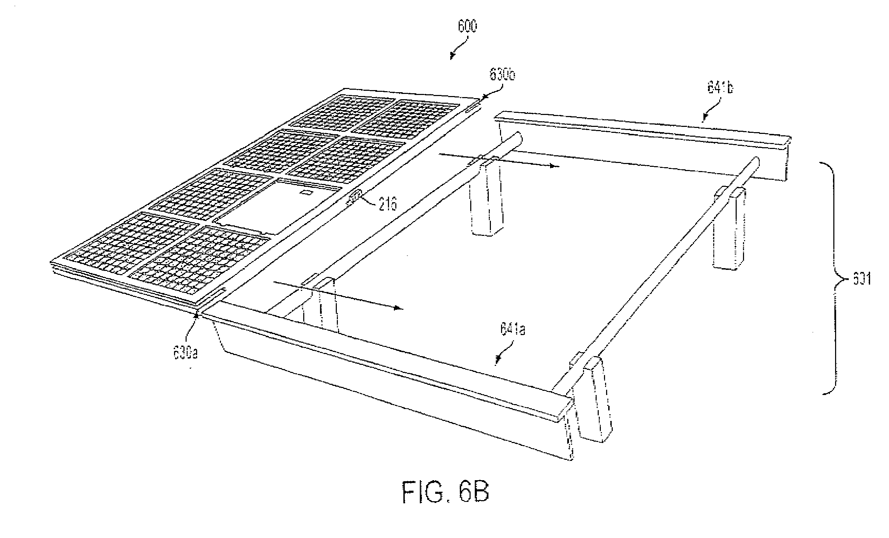

As shown in Figures 1 and 5, each carrier 100 has attachment structures 130a-b in the form of grooves on the carrier underside to scat the carriers 100 on support structures. Figure 6A shows an exemplary carrier 100 with its attachment structures 130a-b being slidably mounted on a support structure 600 comprising a set of spaced parallel rails 640a-b. Figures 1, 5 and 6A show that for carrier 100, the attachment structures 130a-b are on the under side of the carrier 100. Figure 6B shows an alternate embodiment of a carrier 600 where, the attachment structures are provided in the form of slots 630a-b on side edges of the carrier 600, which are mounted on and engage with a support structure 601 that also comprises a set of spaced parallel rails 641a-b.

As can be seen in PIGs 6A, 6B, a carrier 100, 600 can be slid onto the rails 640a, 640b or 641 a, 641 b (FIG, 6B) for mounting in the field. Successive carriers 100, 600,each containing a plurality of solar panels (in this embodiment), can be advanced (by aiding) onto the rails one after another, resulting in considerably reduced field installation time. In addition, adjacent carriers 100, 600 can be electrically connected to one another by mating male and female electrically connectors 216, 218,

Figure 16 shows another embodiment of a carrier 1600 for holding a single solar panel 121 and having a pair of attachment structures 130a-b, Similar to the carrier of FIG. 1 which holds multiple panels, carrier 1600 can be optionally connected to other carriers 1600 using a male electrical connector 216 (not shown) and female electrical connector 218 on an outer part of a frame of the carrier 1600. It should be understood that the various methods and structures described herein for mounting solar panels on a multi-panel carrier, *e.g,*, 100, are applicable to single panel carriers, *e.g.,* 1600, as well. For instance, similar to carrier 100, carrier 1600 can have a recessed area (110 in FIG. 1) and an engagement mechanism for holding solar panel 121 within the recessed area, and an electrical connector (206 in FIG 2) located within the recessed area for electrically connecting the solar panel 121 to connectors 216, 218,

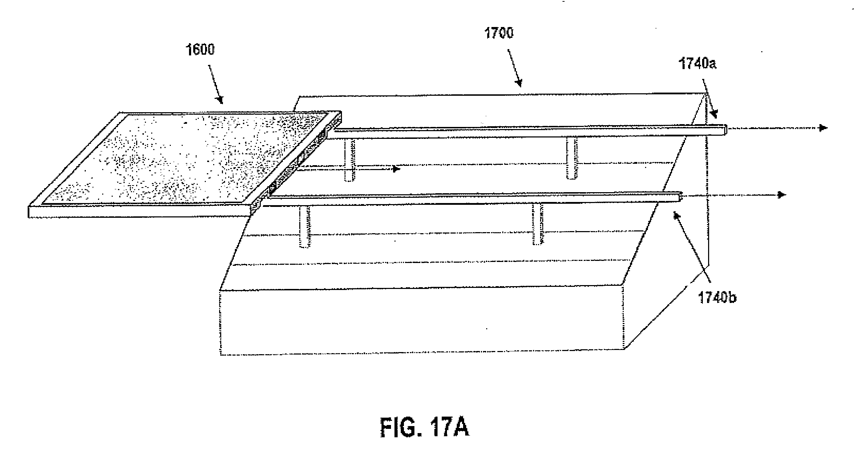

Similar to FIG. 6A, as shown in FlG. 17A, a first single-panel carrier 1600 can be placed on the parallel spaced rails 1740a-b of support structure 1700 and slid down the rails far enough to place another carrier on the rails 1740a-b in place behind it, so it too can be slid down the rails 1740a-b. It should be understood that carrier 1600 could be placed on the rails 1740a-b by simple lifting, or a winch could be used. Alternatively, carrier 1600 could be lined up over the rails 1740a-b and lowered on top of them. It should also be appreciated that the same methods of mounting the carriers described in other embodiments, *e.g.*, for carrier 100, can be used. Further since it may be difficult to manually push successive carriers, *e.g.* 100, 1600 over long distances, carriers could be towered onto a rail *e.g*., 640a-b, 1740a-b at set locations spaced along the rail and then slid into position. Alternatively, a robotic system as described in Application Serial No. 12/846,644 can be used to place the carrier 1600 on rails1740 a-b and slide them down the rails.

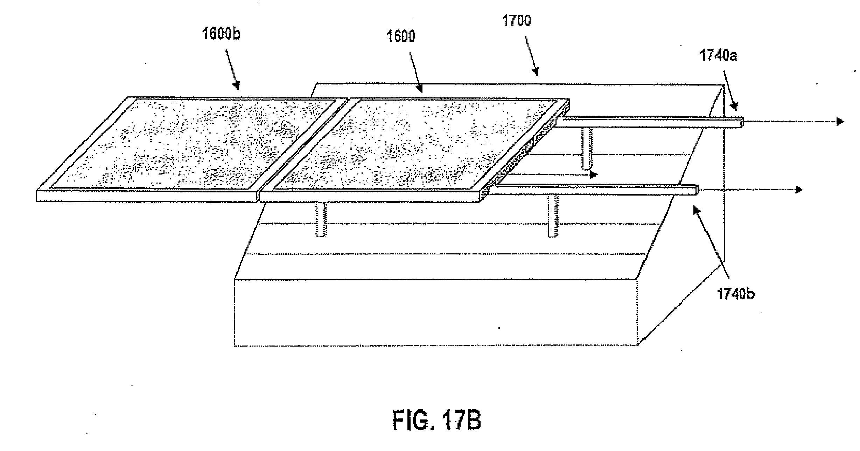

FIG. 17B shows a second carrier 1600b being placed on parallel spaced rails 1740a-b of the support structure 1700 behind the first carrier 1600. The carriers 1600, 1600b are pressed together, so as to facilitate movement in tandem along the support structure. As mentioned above, this connection may a!so facilitate electrically interconnecting the solar panels on the carriers 1600, 1600b via connectors 216, 218. Carriers 1600, 1600b can also be held together by any suitable fastening means 1610 (shown in FIG. 16), such as complementary locking or latching structures; or Velcro™, or any other fastening mechanism, mounted on the outside of the carriers 1600, 1600b. Once contacted, carriers 1600, 1600b can be slid in tandem along the support structure. As subsequent carriers 1600 are placed on the rails, the installer can advance the already mounted carriers 1600 incrementally further down an array row. The installation process continues until a desired number of carriers have been placed on the rail and slid into position.

It should he noted that the support structure 1700 is shown as being designed to run along a horizontal surface of a roof, as opposed to perpendicular to it (*i.e.* in a vertical direction). Although the support structures *(e.g.,* 1700) described herein could be adapted to vertical mounting, horizontal mounting is preferred because it permits carriers to be slid into a desired position without requiring a locking mechanism to prevent the carrier from falling back down die structure. lt should also be understood that various combinations of trucks or no trucks, and different types of rails can be used with any of the carriers (e.g., 100,600,700,800,900,1000,1100,1400 and 1600) described herein,

As mentioned above, row length in large-scale PV systems can be half a mile or more. In order to easily slide carriers along such a long path, as shown in FIG, 7, carrier700 may use a roller truck 760 mounted within the attachment structure 730a, which facilitates casier sliding movement across long stretches of rail 740. FIG. 7 also shows a channel 732a above attachment structure 730a, for routing wiring 712 to an electrical connector 708 in a corresponding recessed area 710a.

The truck 760 comprises a plurality of paired spaced rollers 764a-b mounted on a corresponding axle 762. The truck 760 only takes up a small portion of space inside the attachment structure 760a, so that a rail 740, which may have a T or other cross-sectional shape, can extend far enough in the attachment structures 730a-b to stabilize the carrier 700. Once a carrier 700 is slid into position on the rails 740, it can be secured to the rails 740 by extending a set screw 752 (in channel 750) or other fastener to engage a groove 742 in the rail 740. Advantageously, the set screw 752 also functions as an electrical ground, if made of conductive material grounding a conductive carrier 700. to a conductive rail 740.

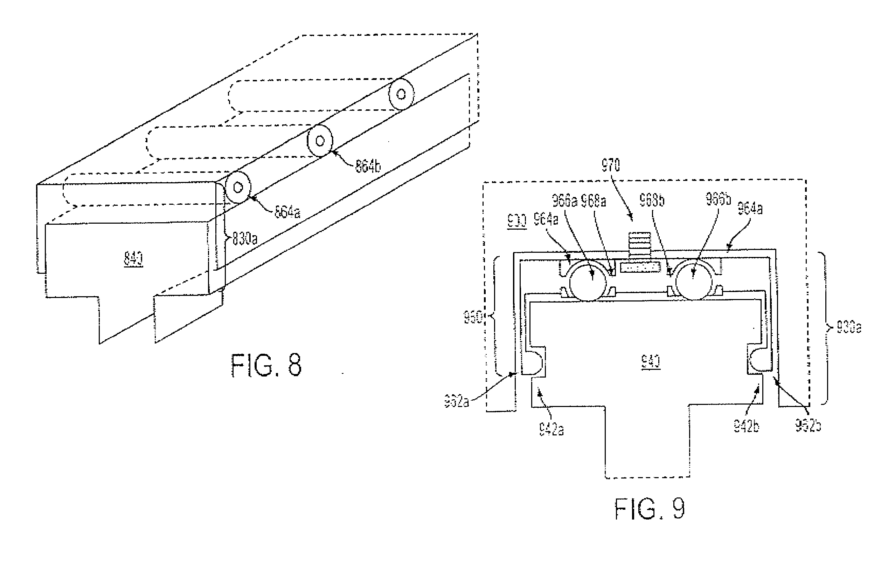

Although, as shown in FIG. 7, truck 760 may use multiple equally spaced rollers 764a-b, a truck could also use any sliding movement assisting structure, including: a single roller on an axle (such as the rollers 864a-b in Figure8) or ball bearings (such as bearings 766a-b in Figure 9). Generally, the trucks 760 are manufactured separately from the carriers 700 and are mounted in attachment structures 730a-b by screw, bolt, glue or other fastener. However, the trucks 760 could also be integral to the attachment structures, and, as shown in the alternate embodiment of Figure 8, rollers 864a-b could be installed directly inside attachment structure 830a. Referring back to Figs. 1, 5 and 6A, the attachment structures 130a-b or 630a-b can take the form of simple grooves, and u non-stick, or low friction slidable surface such as a Teflon®-coated surface can be applied within the grooves instead of using a truck 760 to facilitate sliding movement of a carrier.

Figure 9 shows an alternate embodiment of a carrier 900 having a truck 960 which comprises a plurality of paired spaced ball bearings 966a-b, which are mounted in upper and lower housings 964a-b and 968a-b respectively. Truck 960 also has a pair of arms 962a-b that extend to engage corresponding grooves 942a-b in a support rail 940. Though only shown in this embodiment it should be understood that any truck 760, 960 could use such arms 962a-b which engage the corresponding grooves 942a-b in the support rail. The Figure 9 truck 960 is secured to attachment structure 930a by means of screw 970 or other fastener, which is driven through a top surface of the attachment structure 930a into the body of carrier 900. Other trucks that may be employed are described in more detail in co-pending Application Serial No. 12/846,686, the entire disclosure of which is incorporated herein by reference. The trucks 760, 960 described herein and in Application Serial no. 12/846,686 can be used on any of the carriers 100,600, 700, 800, 900, 1000, 1100, 1400 and 1600 described herein.

A plurality of carriers may be stacked together and shipped to an installation site. For this reason, the carriers, *e.g.,* 100, 600,700, 800, 900, 1000, 1100, 1400 and 1600 are generally designed to lie flat or fit together vertically and are configured to protect, the solar panels in transit, and the trucks, *e.g.,* 760, 960 are designed to be completely contained flush or preferably entirely within the attachment structures. In addition, as noted above, the solar panels arc preferably recessed in the carriers 100, 600, 700,800, 800, 900, 1000, 1100, 1400 and 1600, Optionally, as is shown in FIG. 14, a carrier 1400 can have one or more openings 1402 so that when carriers are stacked, a threaded securing member (not shown) can be inserted in opening 1402 and topped with bolts to ensure the carriers remain secure in place during transit. Carrier 1400 may also have a plurality of protrusions 1404a, 1404b to engage corresponding recesses (not shown) in the backside of carrier1400 to help hold a stack of carriers together as an integrated unit. Alternately, or in addition to the protrusions 1404a, 1404b, and associated recesses. the carrier, 1400 can be formed with a self-aligning lip 1450 that engages a corresponding recess (not shown) on the backside of carrier 1400 for the same purpose.

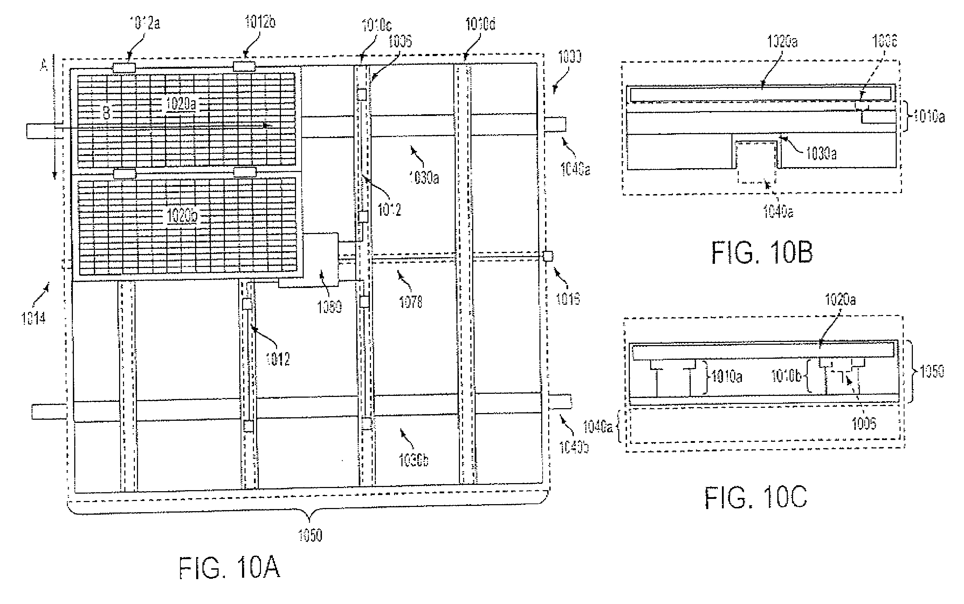

Figures 10A-10C show an embodiment in which carrier 1000 is constructed of a frame structure of spaced elongated members 1010a-d. The spaced elongated members 1010a-d are preferably formed in a U-shape with outwardly extending flanges on either top side. This shape is also known as on hat channel. Attachment structures 1030a-b are fastened transversely across and beneath the spaced elongated members 1010a-d for, as shown in Figure 10A, slidably connecting the carrier 1000 to support rails 1040a-b. Solar panels, *e.g*., 1020a-b, are mounted on top of the spaced elongated members 1010a-d and secured by clips 1012a-b or other fastener to the elongated members 1010a-d. As with the FIG.1-5 embodiment, gluc, Velcro™, or other known engagement means can be used to secure the solar panels 1020a-d to the spaced elongated members 1010a-d. An optional exterior rim 1050, shown in dotted lines in Figure 10A, is lit around the outside of the carrier and fastened to the ends of both the spaced elongated members 1010a-d and attachment structures 1030a-b. The optional exterior rim 1050 provides added structural support and also enables the carrier 1000 to be stacked with other carriers. Preferably, the spaced elongated members 1010a-d, solar panels 1020a-d, and attachment structures 1030a-b are all arranged within the dimension or the thickness of exterior rim 1050 so they do not project beyond a top or bottom surface of the run 1050 of the carrier 1000, enabling stacking of carriers 1000.

Carrier 1000 is also equipped with a common bus system 1080. Wiring 1012 for the common bus system 1080 is run through the spaced elongated members 1010a-d, FIG.10A shows a series of plugs 1006, for connecting the solar panels 1020a-d to the common bus system 280. The common bus system 1080, through a channel 1078 transversely mounted to the bottom of spaced elongated members 1010a-d, also has a plug 1014 and plug 1016 on opposite sides of the exterior rim 1050 of the carrier 1000 for electrically interconnecting adjacent carriers 1000.

FIG. JOB shows a side view of carrier 1000 along axis A of FIG. 10A, showing a solar panel 1020a mounted on spaced elongated member 1010a, along with attachment structure 1030a and rail 1040a. It should be understood that trucks, *e.g*., 760, 960 can be mounted in attachment structure 1030a as well, and that attachment structure 1030a may be filled with holes or screw threads (not shown) that can be used with fasteners, *e.g.*, screw 970 on truck 960 or fit with portions of the truck, *e.g.*, 760, 960 to secure and stabilize the truck within the attachment structure 1030aD. FIG. 10C shows a cross-section of carrier 1000 along axis B of FIG. 10B, showing solar panel 1020a mounted on spaced elongated members 1010a-b along with exterior rim 1050.

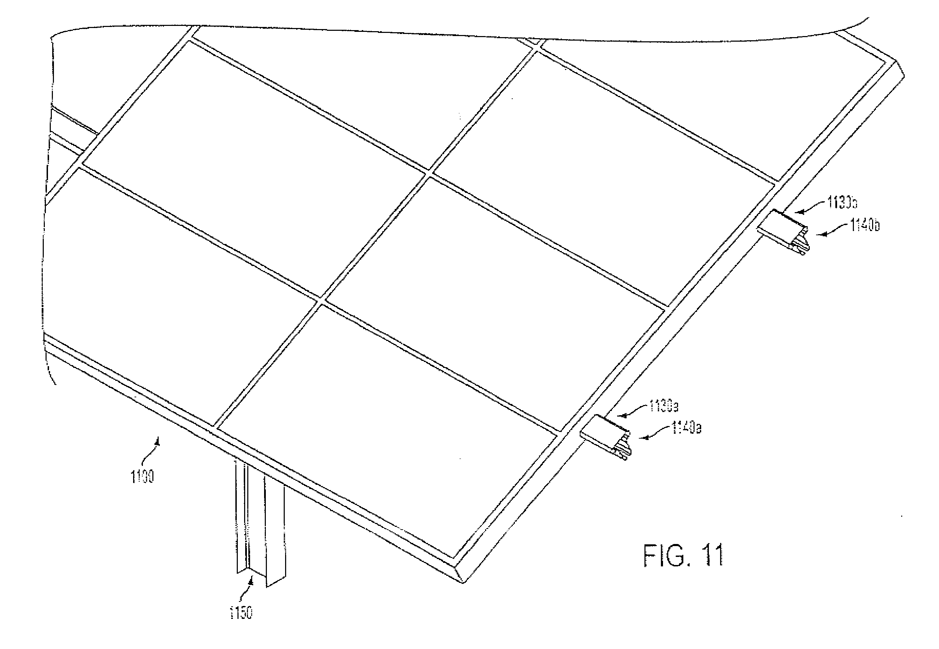

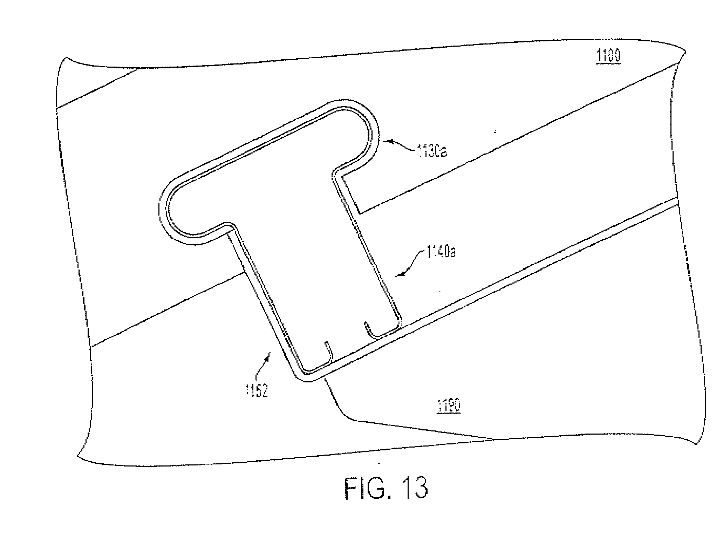

Figures 11-13 show another embodiment of a carrier 1100 that does not employ a truck, the cross sectional profile of the attachment structures 1130a-b, which are formed as grooves in the underside of carrier 1100, that of the rails 1140a-b, which are generally T-shaped in cross-section. Figures 12 and 13 show this embodiment in more detail. Rails 840a-b are mounted on a support table 1190 or other supporting structures, such that carrier 1100 is suspended above the table by the rails 840a-b. As can be seen in Figure 11, the rails 1140a-b are transversely mounted to flange 1152 on the table 1050. The rails 1140a-b themselves are hollow and can be compressed, which allows sliding of the carriers 1100 along the rails, and after the carriers 1100 are slid into place, provide resistance which holds the carriers 1100 to the rails 1140a-b. Figure 12 also shows that carrier 1100 is connected to an electrical harness 1192 on a support table post support structure 1150 via plug 1118, so that collected solar-generated electricity can be gathered and sent to a power grid.

Although the rails depicted in Figures 6A-9 and 11-13 have a generally T-shaped profile, it should be understood that another cross-sectional rail profile, *e.g* circular or I-shapcd, could be used. Further, it should be understood that although the mounting system described herein (*e,g*, 601 shown in FIG. 6B) is generally used for ground mounted installations (as in FIG. 12).

As discussed above, deployment of carriers may be accomplished by manually placing the carriers one after another onto the rails (*e,g*, by lowering carriers onto the rails or aligning attachment structures on the carriers to the rails) and advancing them by sliding them on the rails into a desired position. This placing and sliding can be done at the head end of a row or at spaced positions along a row. Head-end installation reduces equipment and labor movement. Both rails and carriers are designed so that carriers can quickly be placed onto rails and slid into a final positions. Manual deployment of carriers is shown in FIGs. 15A-D. FIG. 15A shows a first cartridge 1500 being lowered onto support structure 1540 via a lifting device 1510. Lifting device 1510, which is attached to an overhead able 1511, can comprise (as shown) an adjustable frame 1512 that holds a cartridge (*e.g.*,1500) by its edges. Each side of the frame 1512 can be opened or closed by engaging a corresponding latch 1513a, 1513b, FIG. 15B shows cartridge 1500 securely plated on the support structure 1540, after which it can be slid down the structure, as shown in FIG. 15C. FIG. 15D shows the placement and subsequent positioning of a second cartridge 1500b after the first cartridge 1500.

Since, as noted above, manual installation of carriers can become difficult as the row length increases, a more automated carrier mounting and delivery system may be used. One such delivery system described in more detail in co-pending Application Serial No. 12/846,614, which is incorporated by reference herein.

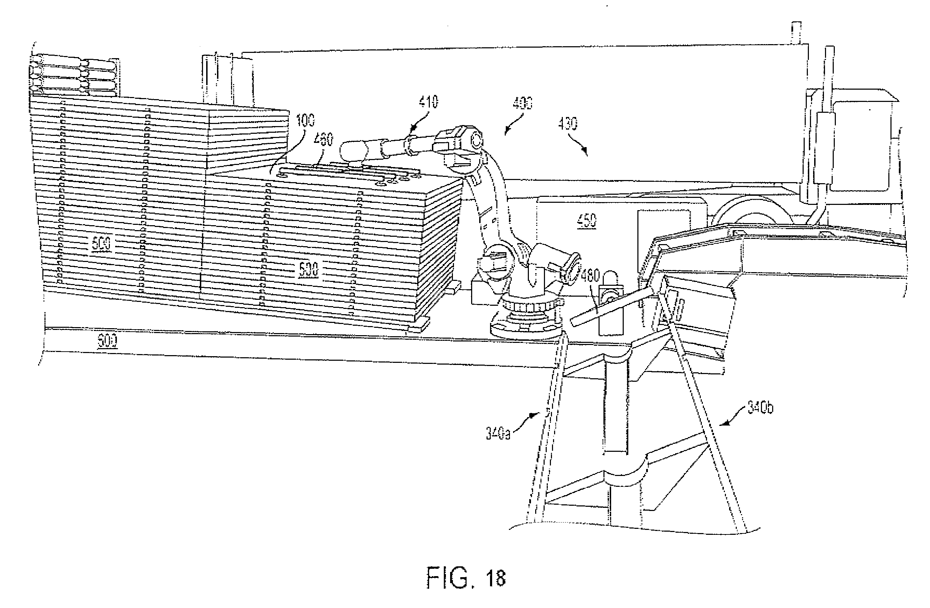

Figure 18 shows such a robotic installation system 400 for deployment or carriers. For simplification. only carriers 100 are shown in FIG. 18, but it should be understood that the illustrated installation system 400 may be used with any of carriers 600, 700,800,900, 1000, 1100, 1400 and 1600. During operation, the robot arm 410, to which th.e frame 460 of a vacuum system 430 is attached, moves to align the frame 460 over a first exemplary FIG. 1 carrier 110. situated as the top carrier 100 in a magazine 500 comprising a plurality of carriers 100 stacked together. Once aligned, the vacuum is activated and suction cups 470 are engaged with the solar panels 120a-h of the carrier 100. The robot arm 410 the lifts the carrier 100 off the magazine 500 and moves the carrier 100 over to the rail system 340a-b.

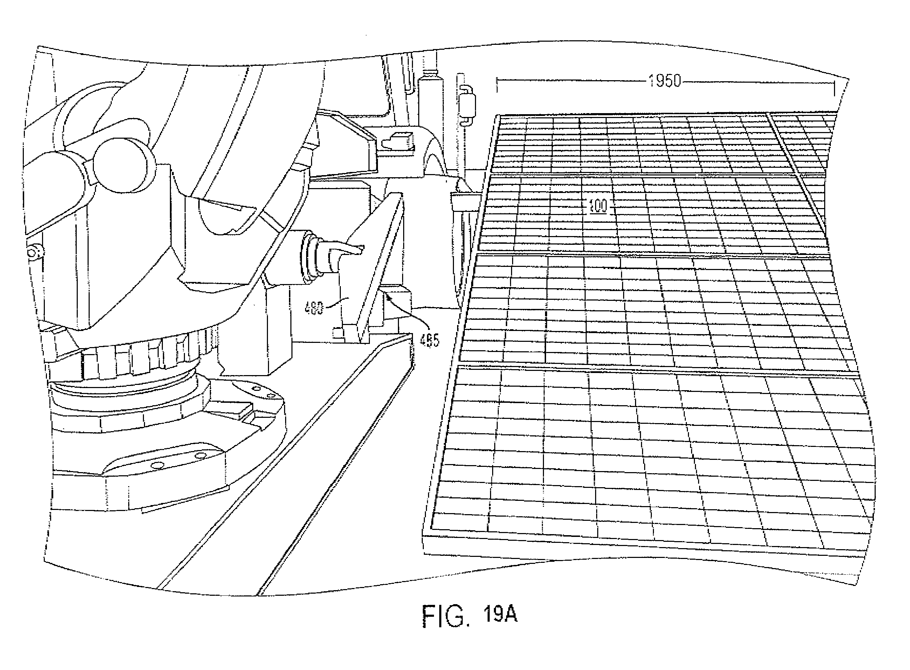

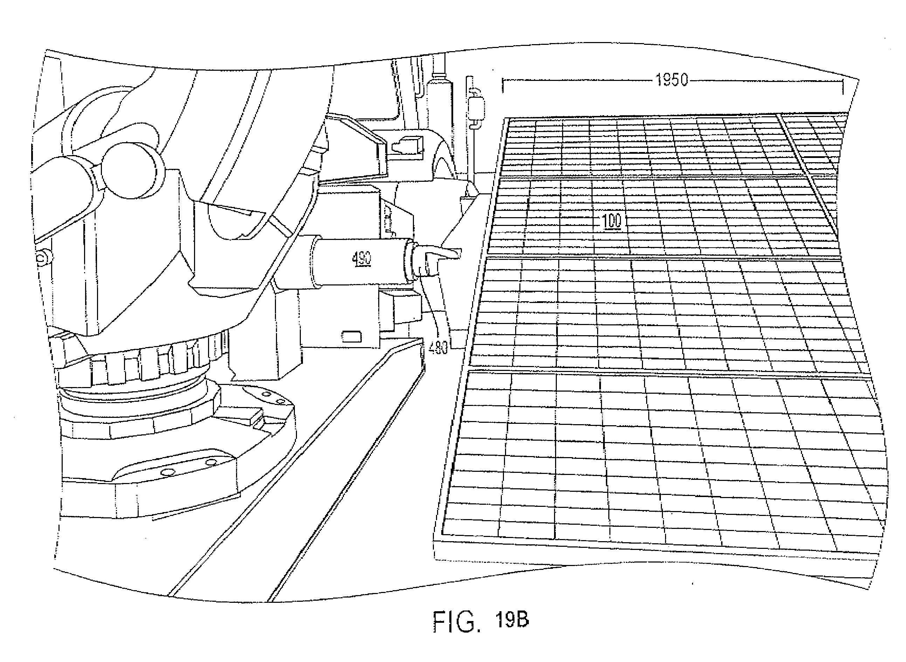

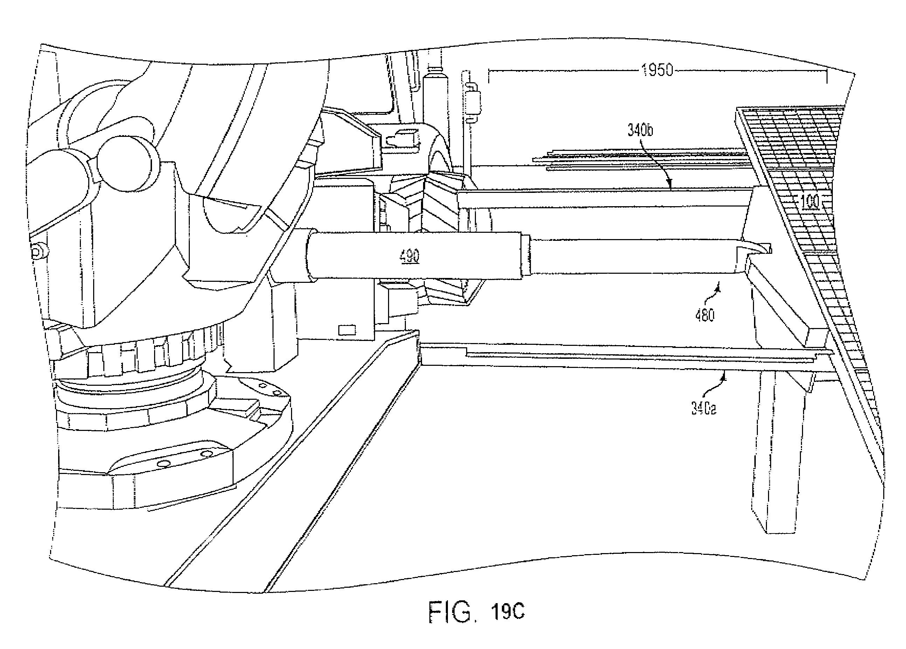

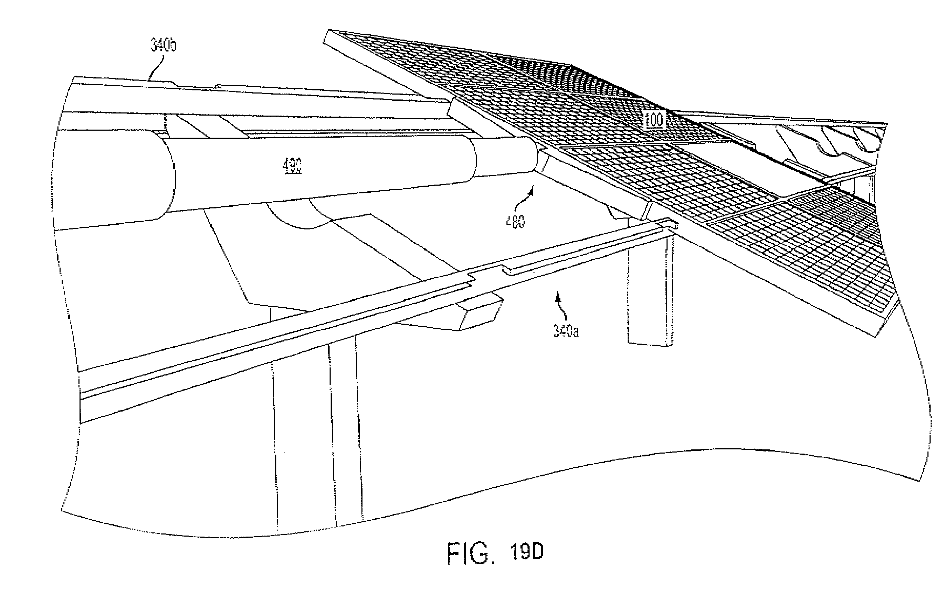

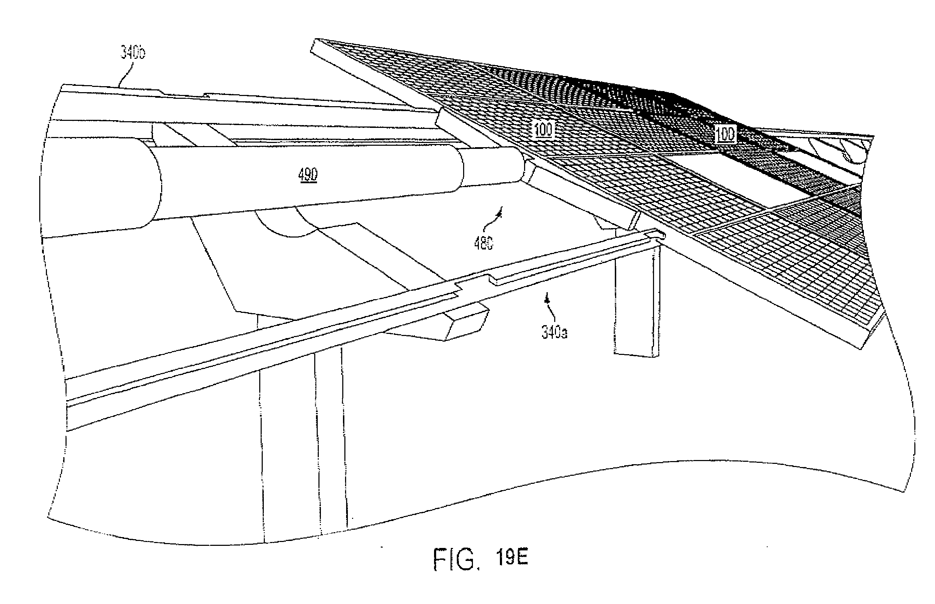

As seen in FIGS. 19A-E,once first exemplary carrier 100 is placed on the rails 340a-b at location 1950 (shown here as an end of the row location), a push actuator 480 pushes a first carrier 100 down the rails 340a-b. As best seen in FIG. 19A, the push actuator 480 has a flat surface 485 to engage the edge of the carrier 100. A telescoping arm 490 extends to press the carrier 100 down the rails 340a-b (FIGS. 19B-D). As seen in FIG. 19E, once the first carrier 100 is in place, a second carrier 100b can be lowered onto the rails 340a-b and pushed by the push actuator 480 along the rails 340a-b. The first and second carriers 100, 100b can also be pushed together along the rails 340a-b. In this manner, multiple carriers 100 can be pushed simultaneously, in order to install a plurality of carriers 100 onto the rail system 340a-b from an end of the row location 1950.

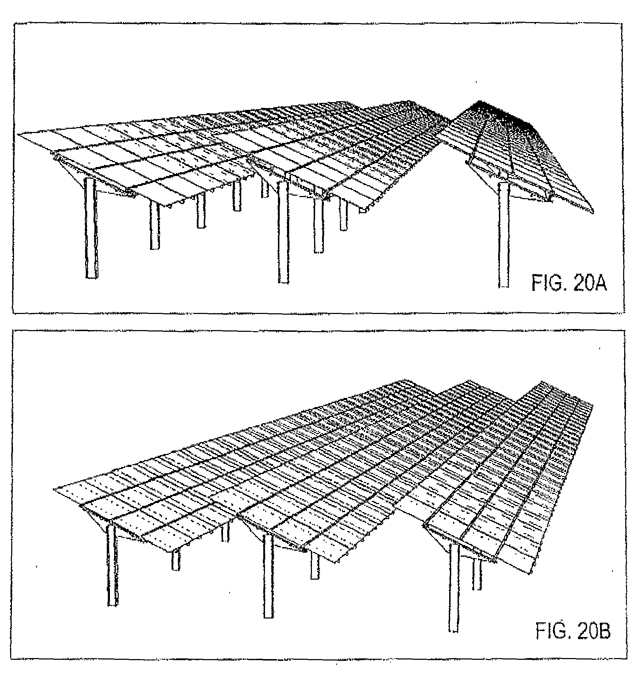

Deployment of carriers at spaced positions along a row or at the end of each row reduces equipment and labor movement. Both rails and carriers are designed so the carriers can quickly be placed onto the rails and slid along the rows and moved into a final position. In this manner, each carrier mounts one or more solar panels (*e.g.* one, four or eight, as shown in the Figures) at once to a set of rails, thereby simplifying installation time and cost. A field installation 2000 is shown in FIGs. 20A and 20B. In such an installation, a plurality of rows of rails *(e.g.,* 640a-b, 1740a-b) arc set up, onto which carriers (*e.g.,* 100,600, 700, 800, 900, 1000, 1100, 1400 and 1600) can be installed in sequence, a row at a time, from spaced positions along each row. Optionally, a robotic installation system 400 can be used.

It should also be noted that the carriers *(e.g.,* 100,600, 700, 800, 900, 1000. 1 100, 1400 and 1600) can be prewired to facilitate solar panel interconnection and the carriers themselves can plug into one another to further reduce installation labor. It should also be noted that any other system components, such as wire harnesses, DC/DC converters, and the like could also be slid in from the ends of the rows, to further increase installation efficiency.

While embodiments have been described in detail, it should be readily understood that the invention is not limited to the disclosed embodiments. Rather the embodiments can be modified to incorporate any number of variations, alterations, substitutions or equivalent arrangements not heretofore described. Although certain features have been described with some embodiments of the carrier, such features can be employed in other disclosed embodiments of the carrier as well. Accordingly, the invention is not limited by the forgoing embodiments, but is only limited by the scope of the appended claims.

## Claims

1. A method for mounting a solar panel carrier on a support structure, the method comprising:
placing a first solar panel carrier having at least one solar panel mounted thereon onto the support structure;
advancing the first solar panel carrier along the support structure.

2. The method of claim 1, further including:
placing a second solar panel carrier having at least one solar panel mounted thereon on the support structure; and
advancing the second solar panel carrier along the support structure, and preferably further including:
advancing one of the first or second solar panel carriers to contact the other of the first and second solar panel carriers, and preferably further including:
further advancing the contacted first and second solar panel carriers along the support tandem, or
wherein advancing the first and second solar panel carriers to be in contact with each other causes a first electrical connector on an outside from of the solar panel first carrier to engage a respective second electrical connector on an outside from of the second solar panel carrier.

3. The method of claim 1, wherein the first solar panel carrier is placed on the support structure at a first location along the support structure and advanced towards a second location along the support structure.

4. The method of claim 1, wherein the support structure comprises spaced parallel rails.

5. The method of claim 4, wherein each solar panel carrier comprises attachment structures for mounting the solar panel carrier to the spaced parallel rails and permitting the solar panel carrier to be advanced along the rails.

6. The method of claim 5, wherein the acts of advancing comprise sliding the first or second solar panel carrier along the rails, and preferably wherein the attachment structures comprise rollers to facilitate sliding of the solar panel carriers along the rails.

7. The method of claim 1, wherein first solar panel carrier has a single solar panel mounted thereon.

8. The method of claim 1, further comprising placing solar panel carriers onto the support structure one after another and advancing the solar panel carriers already mounted on the support structure by pushing the last mounted solar panel carrier against a previously mounted solar panel carrier so that all carrier placed on the support structure advancing along the support structure.

9. The method of claim 1, wherein the placing and advancing are performed by an automated system, or wherein the placing and advancing are done manually.

10. The method of claim 8, wherein said steps of placing and advancing are performed to fill each of a plurality of rows of a field installation.

11. A solar panel mounted apparatus, comprising:
a carrier for holding one solar panel; and
an attachment structure on the carrier for mounting the carrier to a support structure and allowing the carrier to be moved relative to the support structure.

12. A mounting apparatus as in claim 11, wherein the support structure comprises a plurality of spaced parallel rails and the attachment structures include rollers that facilitate the carrier sliding along the spaced parallel rails.

13. A mounting apparatus as in claim 11, wherein the carrier includes a recessed area for holding the solar panel therein and the recessed area has an associated engagement mechanism for engaging the solar panel to hold it within the recessed area.

14. A mounting apparatus as in claim 13, wherein the recessed area has an electrical connector therein for connection with a corresponding electrical connector on the solar panel, the electrical connector being electrically connected to first and second engageable connectors positioned on opposite sides of a frame of the carrier.

15. A mounting apparatus as in claim 11 further including first and second engaging structures positioned on opposite sides of a frame of the carrier so that adjacent carrier are engaged with each other when connected together.
